# EUROPEAN PATENT SPECIFICATION

(11) **EP 2 923 880 B1**
(45) Date of publication and mention of the grant of the patent: **24.04.2019**
(21) Application number: 15160016.0
(22) Date of filing: 20.03.2015
(51) Int. Cl.: B60L 11/18, H02J 7/00, H01R 13/62

(54) **BATTERY CHARGER**
BATTERIELADEGERÄT
CHARGEUR DE BATTERIE

(30) Priority: 24.03.2014 JP 2014059649
(43) Date of publication of application: 30.09.2015
(73) Proprietor: TOYOTA JIDOSHA KABUSHIKI KAISHA, Toyota-shi, Aichi, 471-8571 (JP)
(72) Inventor: Isobe, Toru, Toyota-shi, Aichi 471-8571 (JP)
(74) Representative: TBK

(56) References cited:
- WO-A1-2012/108590
- DE-A1-102010 025 951
- DE-U1-202013 100 234
- JP-A- H0 731 009
- JP-A- 2003 118 671
- JP-A- 2013 082 013
- US-A1- 2009 212 637
- US-A1- 2010 301 801
- US-A1- 2012 112 552
- US-A1- 2012 164 849
- US-A1- 2013 257 373
- US-A1- 2013 285 604
- US-B1- 6 764 373

## Description

### BACKGROUND OF THE INVENTION

### 1. Field of the Invention

The present invention relates to a battery charger, and more particularly to, for example, a battery charger that includes a second charging terminal magnetically connected to a first charging terminal of a moving body and supplies electric power from the second charging terminal to the first charging terminal.

### 2. Description of Related Art

When a moving body is charged, a charging terminal of the moving body and a charging terminal of a battery charger need to be connected. When the position of the moving body is deviated from a predetermined charging position, the charging terminals cannot be properly connected. Accordingly, it is preferable that the battery charger be able to absorb the position error of the moving body and to connect the charging terminals even when the position of the moving body is deviated from the predetermined charging position.

For example, Japanese Unexamined Patent Application Publication No. 2013-82013 discloses a charging system that supports a charging terminal of a battery charger by an elastic body and includes a guide part formed in the charging terminal of the battery charger to guide a charging terminal of a moving body, whereby it is possible to guide the charging terminal of the moving body to the charging terminal of the battery charger by the guide part while the elastic body is deformed so as to be able to connect the charging terminal of the moving body and the charging terminal of the battery charger even when the position of the moving body is deviated from a predetermined charging position.

The charging system disclosed in Japanese Unexamined Patent Application Publication No. 2013-82013 uses the elastic body and the guide part to absorb the position error of the moving body when the moving body is charged, which causes an increase in the size of the battery charger.

Note that Mag Code (registered trademark) manufactured by Rosenberger is known as the magnetic connector.

DE 10 2010 025 951 A1 discloses a battery charger according to the preamble of claim 1.

### SUMMARY OF THE INVENTION

The present invention has been made in view of the aforementioned background, and aims to provide a battery charger capable of absorbing a position error of the moving body when the moving body is charged in a compact configuration.

The above object is solved by a battery charger according to claim 1. Advantageous developments are subject-matters of the dependent claims. The embodiments, aspects and/or examples of the present disclosure which are not covered by the appended claims are considered as not being part of the present invention.

A battery charger according to one embodiment includes a second charging terminal magnetically connected to a first charging terminal of a moving body and supplies electric power from the second charging terminal to the first charging terminal, the battery charger including: a charger body; and a suspension member that suspends the second charging terminal from the charger body.

According to the above configuration, with the simple configuration in which the second charging terminal is suspended by the suspension member, it is possible to magnetically connect the first charging terminal and the second charging terminal to supply electric power from the second charging terminal to the first charging terminal while absorbing the position error of the moving body when the moving body is charged.

In the above battery charger, the suspension member preferably includes an elastic member. According to the above configuration, it is possible to absorb a wider range of the position error of the moving body.

The above battery charger includes a turnover preventing member that prevents turnover of the second charging terminal. According to the above configuration, even when the second charging terminal pendulates, the second charging terminal does not turn over, and it is possible to magnetically connect the first charging terminal to the second charging terminal without failure.

In the above battery charger, a magnet of the first charging terminal and a magnet of the second charging terminal are preferably arranged in such a way as to prevent the first charging terminal and the second charging terminal from being magnetically connected upside down or inside out. According to the above configuration, it is possible to provide a good electrical connection between the first charging terminal and the second charging terminal.

In the above battery charger, one of a surface in a power-feeding part included in the second charging terminal opposed to the first charging terminal and a surface in a power-receiving part included in the first charging terminal opposed to the second charging terminal is preferably wider than the other one in order to absorb positional deviation between the first charging terminal and the second charging terminal when the first charging terminal and the second charging terminal are magnetically connected.

According to the above configuration, even when the first charging terminal and the second charging terminal are magnetically connected while being slightly deviated from each other, it is possible to provide a good electrical connection between the power-receiving part of the first charging terminal and the power-feeding part of the second charging terminal.

The above battery charger preferably includes a guide member corresponding to a peripheral edge part of the moving body, the guide member including a concave part to guide the moving body to a charging position that is set.

According to the above configuration, when the moving body is moved while being kept in contact with the inner side surface of the concave part, the moving body can be guided to the predetermined charging position.

The above battery charger preferably includes a fixing member that fixes an upper end part of the suspension member to the charger body, in which the fixing member can be attached to or detached from the charger body.

According to the above configuration, the second charging terminal can be freely moved and be connected to a charging terminal of another device.

The above battery charger preferably includes the suspension member provided separately from a wire that supplies electric power to the second charging terminal.

According to the above configuration, it is possible to prevent the wire from being elongated or damaged due to repeated load applied on the wire that supplies electric power to the second charging terminal.

According to the present invention, it is possible to provide a battery charger capable of absorbing the position error of the moving body when the moving body is charged in a compact configuration.

The above and other objects, features and advantages of the present invention will become more fully understood from the detailed description given hereinbelow and the accompanying drawings which are given by way of illustration only, and thus are not to be considered as limiting the present invention.

### BRIEF DESCRIPTION OF THE DRAWINGS

Fig. 1 is a side view schematically showing a state in which a moving body is brought close to a battery charger when the moving body is charged using the battery charger according to a first embodiment;
Fig. 2 is a front view schematically showing the battery charger according to the first embodiment;
Fig. 3 is a side view schematically showing a state in which a charging terminal of the battery charger is connected to a charging terminal of the moving body when the moving body is charged using the battery charger according to the first embodiment;
Fig. 4 is a plane view schematically showing a state in which the charging terminal of the battery charger is connected to the charging terminal of the moving body when the moving body is charged using the battery charger according to the first embodiment;
Fig. 5 is a vertical part-sectional view showing a first charging terminal according to the first embodiment;
Fig. 6 is a vertical part-sectional view showing a second charging terminal according to the first embodiment;
Fig. 7 is a vertical part-sectional view showing a state in which the first charging terminal and the second charging terminal according to the first embodiment are magnetically connected;
Fig. 8 is a diagram schematically showing an arrangement of magnets of a first charging terminal according to a second embodiment;
Fig. 9 is a diagram schematically showing an arrangement of magnets of a second charging terminal according to the second embodiment;
Fig. 10 is a horizontal part-sectional view schematically showing a relation between a contact point of a first charging terminal and a contact point of a second charging terminal according to a third embodiment;
Fig. 11 is a horizontal part-sectional view schematically showing a first charging terminal according to a fourth embodiment;
Fig. 12 is a horizontal part-sectional view schematically showing a state in which the first charging terminal and a second charging terminal according to the fourth embodiment are magnetically connected;
Fig. 13 is a plane view schematically showing a battery charger and a moving body according to a fifth embodiment;
Fig. 14 is a horizontal part-sectional view schematically showing a state in which a suspension member according to a sixth embodiment is fixed to a charger body;
Fig. 15 is a front view schematically showing a state in which the suspension member according to the sixth embodiment is fixed to the charger body;
Fig. 16 is a horizontal part-sectional view schematically showing a state before a first charging terminal and a second charging terminal according to a seventh embodiment are magnetically connected; and
Fig. 17 is a horizontal part-sectional view schematically showing a state after the first charging terminal and the second charging terminal according to the seventh embodiment are magnetically connected.

### DESCRIPTION OF THE EXEMPLARY EMBODIMENTS

Hereinafter, specific embodiments of the present invention will be described in detail with reference to the drawings. However, the present invention is not limited to the following embodiments. For the sake of clarification of the description, the following description and the drawings are simplified as appropriate.

### <First embodiment>

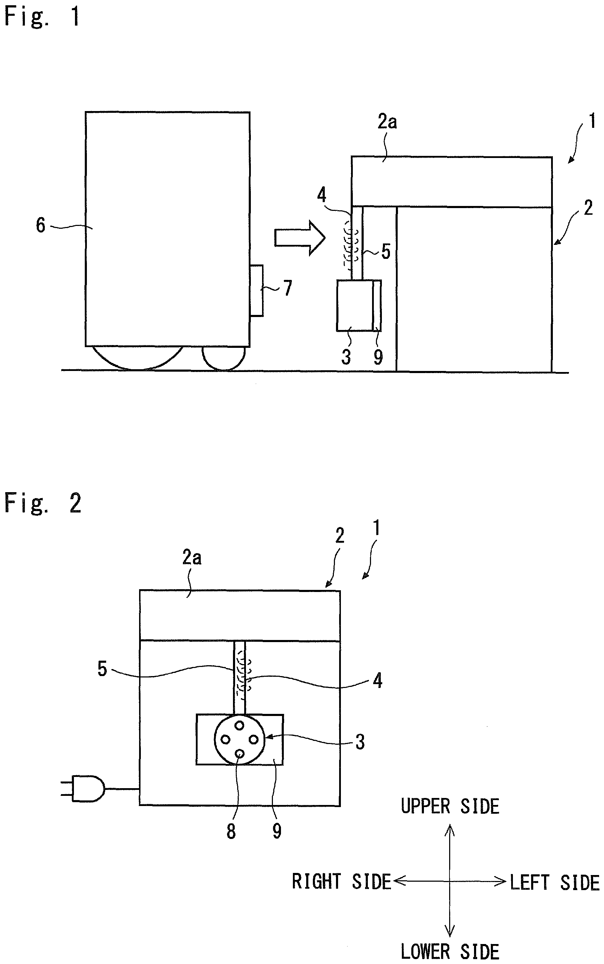

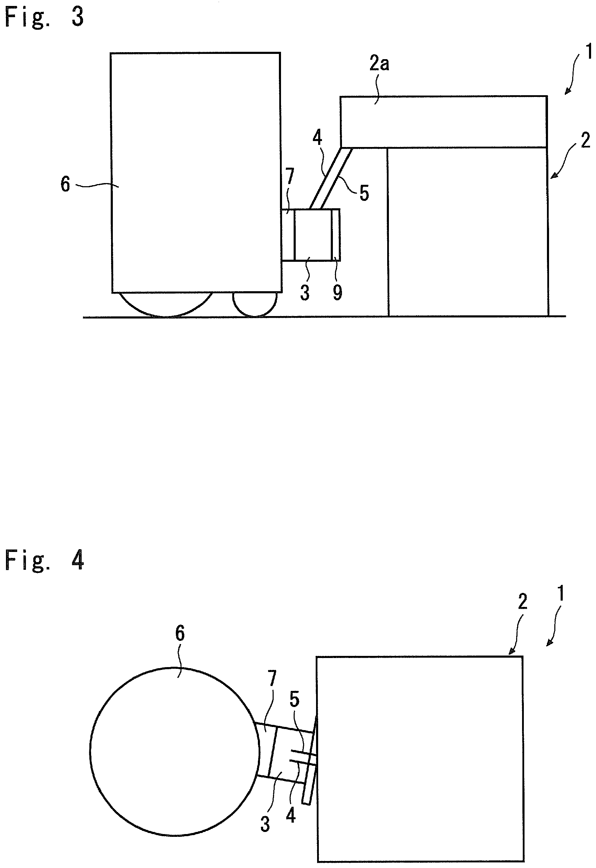

First, the outline of a battery charger according to this embodiment will be described. Fig. 1 is a side view schematically showing a state in which a moving body is brought close to the battery charger when the moving body is charged using the battery charger according to the first embodiment. Fig. 2 is a front view schematically showing the battery charger according to the first embodiment. Fig. 3 is a side view schematically showing a state in which a charging terminal of the battery charger is connected to a charging terminal of the moving body when the moving body is charged using the battery charger according to the first embodiment. Fig. 4 is a plane view schematically showing a state in which the charging terminal of the battery charger is connected to the charging terminal of the moving body when the moving body is charged using the battery charger according to the first embodiment.

A battery charger 1 includes, as shown in Figs. 1 and 2, a charger body 2, a first charging terminal 3, and a suspension member 4. The charger body 2 supplies electric power to the first charging terminal 3 through a wire 5. The charger body 2 includes a protrusion part 2a that protrudes from an upper part of the charger body 2 substantially horizontally.

The first charging terminal 3 is magnetically connected to a second charging terminal 7 of a moving body 6 and electric power is supplied to a battery (not shown) of the moving body 6 through the first charging terminal 3 and the second charging terminal 7. The first charging terminal 3 includes, as shown in Fig. 2, magnets 8 magnetically connected to magnets included in the second charging terminal 7 of the moving body 6. The details of the first charging terminal 3 and the second charging terminal 7 will be described later. It is sufficient for now that one of the first charging terminal 3 and the second charging terminal 7 includes magnets and the other one of the first charging terminal 3 and the second charging terminal 7 includes a member magnetically attracted to the magnets.

The moving body 6 is, for example, a typical robot that autonomously moves by acquiring electric power from the battery that is mounted on the moving body 6, and includes the second charging terminal 7 that is magnetically connected to the first charging terminal 3 of the battery charger 1 in order to receive and store electric power from the battery charger 1 in the battery. However, the moving body 6 is not limited to the robot that autonomously moves and may be a robot that is manipulated.

The suspension member 4 suspends the first charging terminal 3 from the charger body 2. The suspension member 4 according to this embodiment is provided separately from the wire 5 and the upper end part of the suspension member 4 is fixed to the protrusion part 2a of the charger body 2. This suspension member 4 is arranged substantially in the vertical direction of the battery charger 1 and suspends the first charging terminal 3 at a position somewhat below the height at which the second charging terminal 7 of the moving body 6 is arranged.

When the moving body 6 approaches the battery charger 1, as shown in Fig. 3, the first charging terminal 3 is attracted to the second charging terminal 7 by the magnetic attractive force and is connected to the second charging terminal 7. At this time, the suspension member 4 does not inhibit the movement of the first charging terminal 3 due to the magnetic attractive force between the first charging terminal 3 and the second charging terminal 7, whereby it is possible to magnetically connect the first charging terminal 3 and the second charging terminal 7 while absorbing the position error of the moving body 6.

The battery charger 1 having the above configuration is able to magnetically connect the first charging terminal 3 and the second charging terminal 7, and supply electric power from the first charging terminal 3 to the second charging terminal 7 while absorbing the position error of the moving body 6 when the moving body 6 is charged with a simple configuration in which the first charging terminal 3 is suspended by the suspension member 4.

Further, since the battery charger 1 according to this embodiment suspends the first charging terminal 3 by the suspension member 4 provided separately from the wire 5, it is possible to prevent the wire 5 from being elongated or damaged due to repeated load applied on the wire 5.

The battery charger 1 preferably includes a turnover preventing member 9. The turnover preventing member 9 prevents the turnover of the first charging terminal 3 in order to prevent the surface on the first charging terminal 3 magnetically connected to the second charging terminal 7 from being faced to the side of the charger body 2.

When the first charging terminal 3 rotates about the axis extending substantially in the vertical direction of the battery charger 1, for example, the end part of the turnover preventing member 9 in the horizontal direction contacts the charger body 2, which inhibits the rotation of the first charging terminal 3. The turnover preventing member 9 according to this embodiment is a plate-like member longitudinally arranged in the horizontal direction of the battery charger 1, and is fixed to the surface opposite to the surface of the first charging terminal 3 magnetically connected to the second charging terminal 7. When the turnover preventing member 9 rotates about the axis extending substantially in the vertical direction of the battery charger 1, the end part of the turnover preventing member 9 in the longitudinal direction contacts the front surface of the charger body 2.

According to the above configuration, even when the first charging terminal 3 pendulates, the first charging terminal 3 does not turn over, and it is therefore possible to magnetically connect the second charging terminal 7 to the first charging terminal 3 without failure.

Further, as shown by broken lines in Figs. 1 and 2, when the suspension member 4 includes an elastic member such as a rubber or a spring, it is possible to absorb a wider range of the position error of the moving body 6.

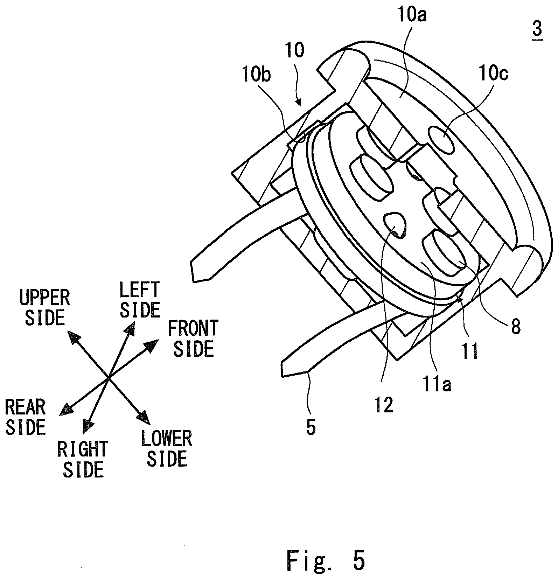

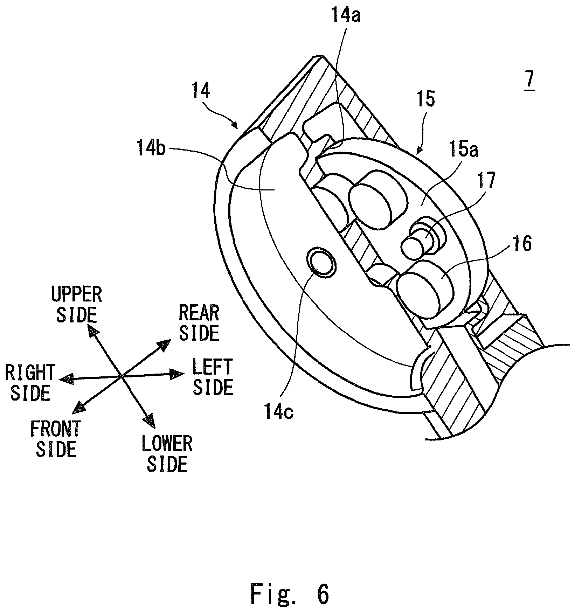

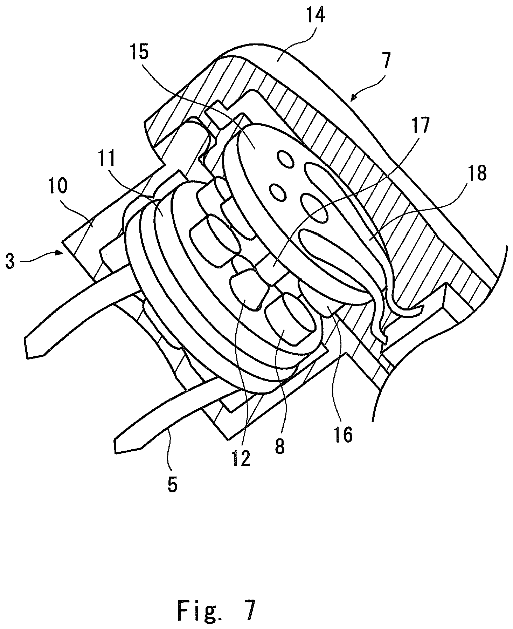

Next, preferred embodiments of the first charging terminal 3 and the second charging terminal 7 will be described. Fig. 5 is a vertical part-sectional view showing the first charging terminal according to this embodiment. Fig. 6 is a vertical part-sectional view showing the second charging terminal according to this embodiment. Fig. 7 is a vertical part-sectional view showing a state in which the first charging terminal and the second charging terminal according to this embodiment are magnetically connected.

The first charging terminal 3 includes, as shown in Fig. 5, a case 10, a movable plate 11, magnets 8, and contact points 12. The case 10 is made of an insulating member, and includes a surface 10a that is opposed to the second charging terminal 7 when the first charging terminal 3 and the second charging terminal 7 are magnetically connected, and an accommodation part 10b that accommodates the movable plate 11.

In the movable plate 11, the direction substantially perpendicular to a surface 11a of the movable plate 11 is substantially parallel to the front-back direction of the first charging terminal 3. The movable plate 11 moves substantially in the front-back direction of the first charging terminal 3 in the accommodation part 10b.

The magnets 8 are magnetically connected to the magnets of the second charging terminal 7. The magnets 8 are fixed to the surface 11a of the movable plate 11. In this embodiment, two magnets are arranged in the horizontal direction of the first charging terminal 3 and two magnets are arranged in the vertical direction of the first charging terminal 3. In summary, a total of four magnets 8 are fixed to the movable plate 11. However, the arrangement and the number of the magnets 8 are not particularly limited.

The contact points 12 are electrically connected to the contact points of the second charging terminal 7. The contact points 12 are fixed to the surface 11a of the movable plate 11. In this embodiment, two contact points 12 are arranged in the horizontal direction between the magnets 8 arranged in the vertical direction of the first charging terminal 3. However, the arrangement of the contact points 12 is not particularly limited.

When the movable plate 11 moves to the front side of the first charging terminal 3 due to the magnetic attractive force between the first charging terminal 3 and the second charging terminal 7, the tip parts of the contact points 12 are exposed from through-holes 10c formed on the surface 10a of the first charging terminal 3. At this time, the movable plate 11 preferably includes an elastic member such as a spring so that the movable plate 11 moves to the rear side of the first charging terminal 3 when the first charging terminal 3 and the second charging terminal 7 are magnetically disconnected. According to the above configuration, when the first charging terminal 3 and the second charging terminal 7 are magnetically disconnected, the tip parts of the contact points 12 are not exposed from the through-holes 10c of the first charging terminal 3, and it is possible to prevent, for example, an operator from touching the contact points 12. The contact points 12 are electrically connected to an external power-supply unit (not shown) through the wire 5.

The second charging terminal 7 includes, as shown in Fig. 6, a case 14, a fixture plate 15, magnets 16, and contact points 17. While the second charging terminal 7 has a configuration substantially the same as that of the first charging terminal 3, unlike the first charging terminal 3, in the second charging terminal 7, the fixture plate 15 is fixed to the inside of an accommodation part 14a of the case 14.

The magnets 16 corresponding to the magnets 8 of the first charging terminal 3 and the contact points 17 corresponding to the contact points 12 of the first charging terminal 3 are fixed to a surface 15a of the fixture plate 15, and the tip parts of the contact points 17 are exposed from through-holes 14c formed on a surface 14b of the case 14. The contact points 17 are connected to the battery of the moving body 6 through a wire 18 (Fig. 7).

According to the above configuration, when the moving body 6 is brought close to the battery charger 1, as shown in Fig. 7, the movable plate 11 of the first charging terminal 3 moves to the front side of the first charging terminal 3 due to the magnetic attractive force between the magnets 8 of the first charging terminal 3 and the magnets 16 of the second charging terminal 7, and the first charging terminal 3 and the second charging terminal 7 are magnetically connected in a state in which the surface 10a of the first charging terminal 3 and the surface 14b of the second charging terminal 7 are opposed to each other. At this time, the tip parts of the contact points 12 of the first charging terminal 3 are exposed from the through-holes 10c of the first charging terminal 3 and are electrically connected to the tip parts of the contact points 17 exposed from the through-holes 14c of the second charging terminal 7. As a result, it is possible to supply electric power to the moving body 6 from the battery charger 1.

While the second charging terminal 7 according to this embodiment fixes the fixture plate 15 to the inside of the accommodation part 14a of the case 14, which is not similar to the first charging terminal 3, the second charging terminal 7 may have a configuration in which a plate to which the magnets 16 and the contact points 17 are fixed moves, which is similar to the first charging terminal 3.

Further, while the first charging terminal 3 has a configuration in which the movable plate 11 moves inside the accommodation part 10b of the case 10, which is not similar to the second charging terminal 7, the plate to which the magnets 8 and the contact points 12 are fixed may be fixed to the inside of the accommodation part 10b and the tip parts of the contact points 12 may be exposed from the through-holes 10c of the first charging terminal 3, which is similar to the second charging terminal 7.

### <Second embodiment>

While the arrangement of the magnets 8 of the first charging terminal 3 and the magnets 16 of the second charging terminal 7 is not mentioned in the first embodiment, the magnets 8 of the first charging terminal 3 and the magnets 16 of the second charging terminal 7 are preferably arranged in such a way as to prevent the first charging terminal 3 and the second charging terminal 7 from being magnetically connected inside out or upside down. In the following description, elements of the second embodiment the same as those in the first embodiment are denoted by the same reference symbols as those in the first embodiment.

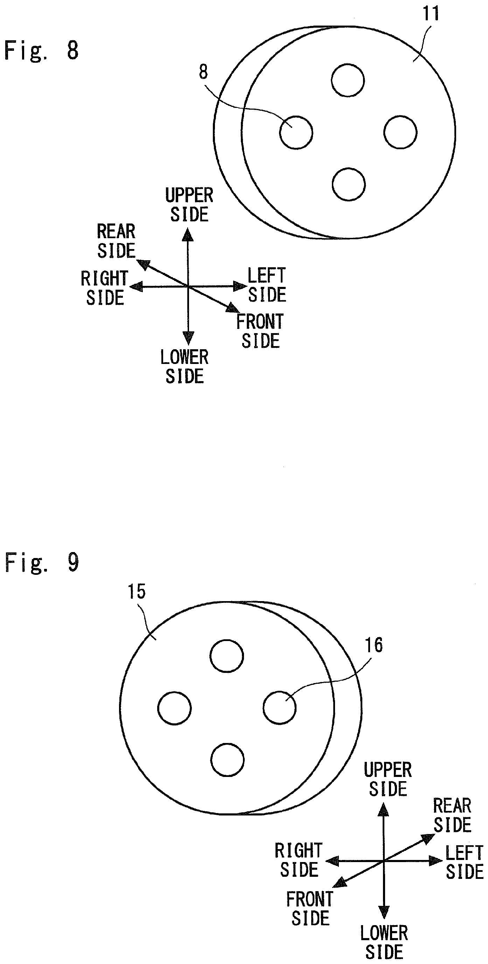

Fig. 8 is a diagram schematically showing an arrangement of the magnets of the first charging terminal according to this embodiment. Fig. 9 is a diagram schematically showing an arrangement of the magnets of the second charging terminal according to this embodiment. In Figs. 8 and 9, contact points and the like are not shown in order to make clear the arrangement of the magnets.

In the first charging terminal 3 according to this embodiment, as shown in Fig. 8, the magnets 8 are arranged in a substantially rhombic shape. The magnets 8 at the top and the left of the movable plate 11 are formed as the south pole and the magnets 8 at the bottom and the right of the movable plate 11 are formed as the north pole.

In a similar way, in the second charging terminal 7, as shown in Fig. 9, the magnets 16 are arranged in a substantially rhombic shape. The magnets 16 at the top and the right of the fixture plate 15 are formed as the north pole and the magnets 16 at the bottom and the left of the fixture plate 15 are formed as the south pole.

According to the above configuration, it is possible to provide a good electrical connection between the contact points 12 of the first charging terminal 3 and the contact points 17 of the second charging terminal 7 corresponding to the contact points 12 of the first charging terminal 3.

### <Third embodiment>

While the size of the contact points 12 of the first charging terminal 3 and the contact points 17 of the second charging terminal 7 are not mentioned in the first and second embodiments, it is preferable that the contact points 12 of the first charging terminal 3 and the contact points 17 of the second charging terminal 7 be electrically connected even when the first charging terminal 3 and the second charging terminal 7 are magnetically connected while being deviated from each other. In the following description, elements of the third embodiment the same as those in the first embodiment are denoted by the same reference symbols as those in the first embodiment.

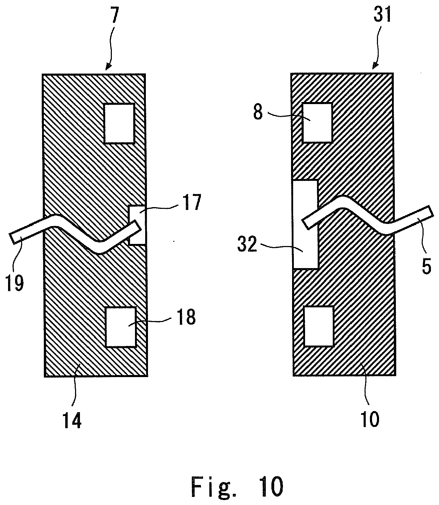

Fig. 10 is a horizontal part-sectional view schematically showing a relation between the contact point of the first charging terminal and the contact point of the second charging terminal according to this embodiment. In this embodiment, the surface in a contact point 32 of a first charging terminal 31 electrically connected to the contact point 17 of the second charging terminal 7 (i.e., the surface on the front side of the first charging terminal 31 in the contact point 32) is wider than the surface in the contact point 17 of the second charging terminal 7 electrically connected to the contact point 32 of the first charging terminal 31 (i.e., the surface on the front side of the second charging terminal 7 in the contact point 17).

According to the above configuration, even when the first charging terminal 31 and the second charging terminal 7 are magnetically connected while being deviated from each other, it is possible to provide a good electrical connection between the contact point 17 of the second charging terminal 7 and the contact point 32 of the first charging terminal 31.

The surface in the contact point 17 of the second charging terminal 7 electrically connected to the contact point of the first charging terminal may be wider than the surface in the contact point of the first charging terminal electrically connected to the contact point 17 of the second charging terminal 7.

### <Fourth embodiment>

A first charging terminal according to this embodiment has a configuration in which a movable plate properly moves substantially in the front-back direction of the first charging terminal. In the following description, elements of the fourth embodiment the same as those in the first embodiment are denoted by the same reference symbols as those in the first embodiment.

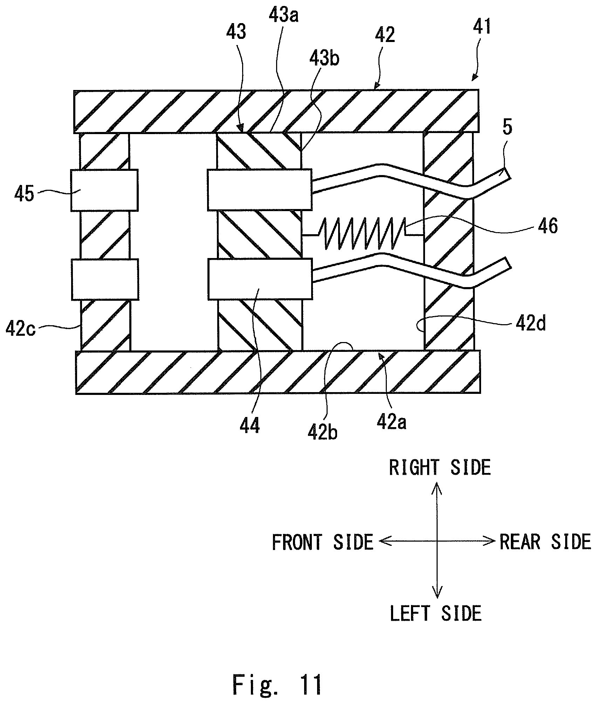

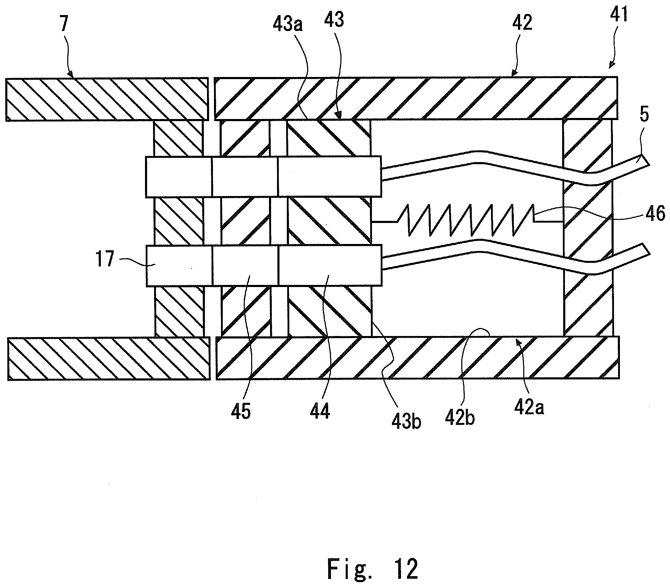

Fig. 11 is a horizontal part-sectional view schematically showing the first charging terminal according to this embodiment. Fig. 12 is a horizontal part-sectional view schematically showing a state in which the first charging terminal and the second charging terminal according to this embodiment are magnetically connected.

In a first charging terminal 41 according to this embodiment, as shown in Fig. 11, a movable plate 43 is accommodated in an accommodation part 42a in a state in which there is little clearance between an inner peripheral surface 42b of the accommodation part 42a of a case 42 and an outer peripheral surface 43a of the movable plate 43. According to the above configuration, as shown in Fig. 12, it is possible to properly move the movable plate 43 substantially in the front-back direction of the first charging terminal 41.

Note that, in the first charging terminal 41 according to this embodiment, as shown in Fig. 12, when the first charging terminal 41 and the second charging terminal 7 are magnetically connected and the movable plate 43 moves to the front side of the first charging terminal 41, contact points 44 fixed to the movable plate 43 are electrically connected to contact points 45 which penetrate through a surface 42c of the case 42. The contact points 45 of the first charging terminal 41 are then electrically connected to the contact points 17 of the second charging terminal 7 and electric power is supplied to the second charging terminal 7 from the first charging terminal 41.

When the first charging terminal 41 and the second charging terminal 7 are magnetically disconnected, a rear surface 43b of the movable plate 43 and a bottom surface 42d of the accommodation part 42a are preferably connected by an elastic member 46 such as a spring so that the contact points 44 of the movable plate 43 and the contact points 45 which penetrate through the surface 42c of the case 42 are electrically disconnected.

According to the above configuration, as shown in Fig. 11, when the first charging terminal 41 and the second charging terminal 7 are magnetically disconnected, the movable plate 43 moves to the rear side of the first charging terminal 41 due to the restoring force of the elastic member 46. As a result, the contact points 44 of the movable plate 43 and the contact points 45 which penetrate through the surface 42c of the case 42 are electrically disconnected, whereby it is possible to prevent, for example, an operator from touching the contact points 45.

Further, it is preferable that a guide (not shown) be formed in the inner peripheral surface 42b of the accommodation part 42a so that the movable plate 43 moves in the front-back direction of the first charging terminal 3 with high accuracy. When a convex part or a concave part formed in the movable plate 43 is fitted to the guide, for example, this guide is able to define the movement of the first charging terminal 3 in the movable plate 43 in the front-back direction.

While the contact points 45 which penetrate through the surface 42c of the case 42 are included in addition to the contact points 44 of the movable plate 43 in this embodiment, which is not similar to the first charging terminal 3, the contact points 44 of the movable plate 43 may be exposed from the surface 42c of the case 42 when the first charging terminal 41 and the second charging terminal 7 are magnetically connected, which is similar to the first charging terminal 3 according to the first embodiment.

### <Fifth embodiment>

A battery charger according to this embodiment is configured to be able to guide a moving body to a predetermined charging position. In the following description, elements of the fifth embodiment the same as those in the first embodiment are denoted by the same reference symbols as those in the first embodiment.

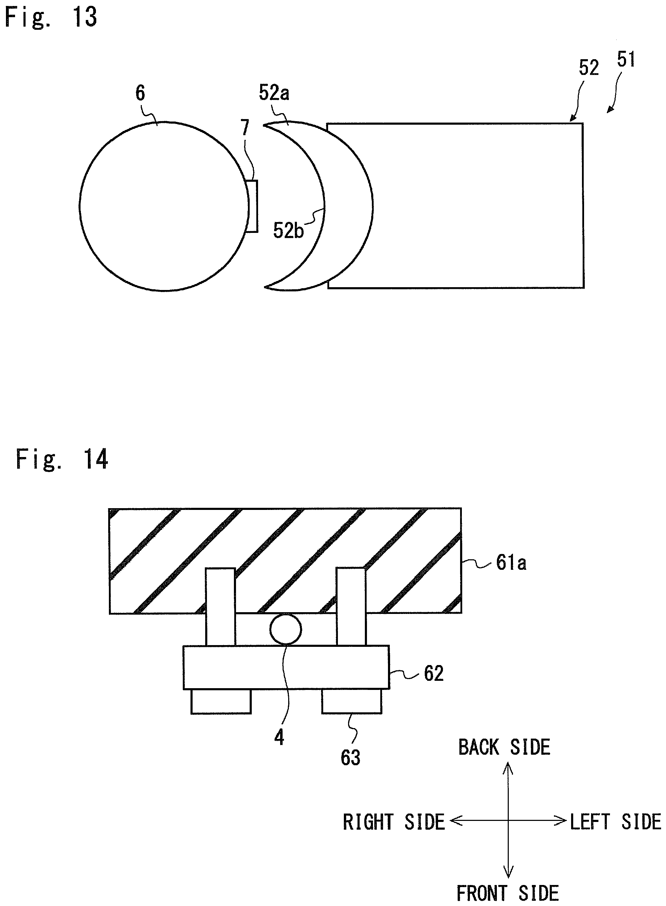

Fig. 13 is a plane view schematically showing the battery charger and the moving body according to this embodiment. A battery charger 51 according to this embodiment includes a protrusion part 52a which protrudes from the upper part of a charger body 52 substantially horizontally. A concave part 52b corresponding to a peripheral edge part of the moving body 6 is formed in the protrusion part 52a. According to the above configuration, when the moving body 6 is moved while being kept in contact with the inner side surface of the concave part 52b, the moving body 6 can be guided to the predetermined charging position.

### <Sixth embodiment>

A battery charger according to this embodiment fixes an upper end part of a suspension member to a charger body in such a way that the suspension member can be removed from the charger body. In the following description, elements of the sixth embodiment the same as those in the first embodiment are denoted by the same reference symbols as those in the first embodiment.

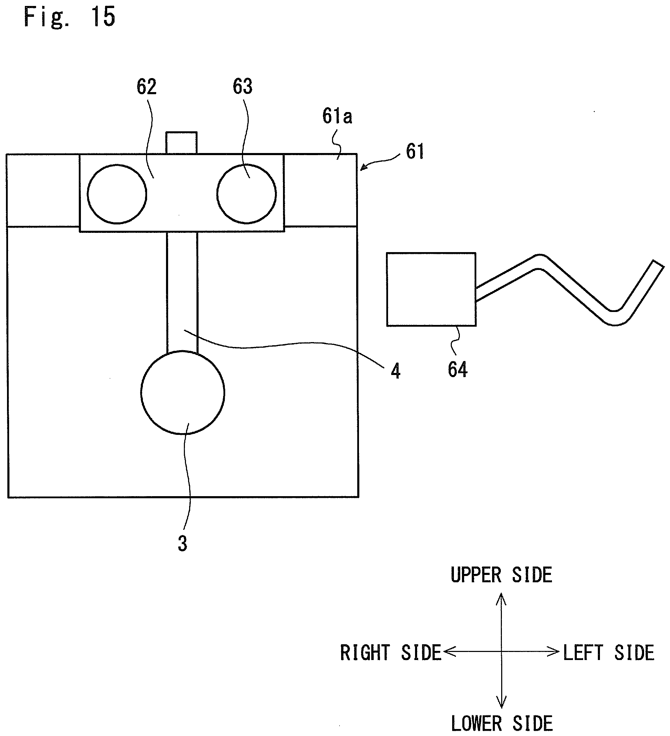

Fig. 14 is a horizontal part-sectional view schematically showing a state in which the suspension member according to this embodiment is fixed to the charger body. Fig. 15 is a front view schematically showing a state in which the suspension member according to this embodiment is fixed to the charger body.

The suspension member 4 according to this embodiment is, as shown in Figs. 14 and 15, fixed to the front surface of a protrusion part 61a which protrudes from an upper part of a charger body 61 through a fixing plate 62 and bolts 63. That is, the suspension member 4 is held between the fixing plate 62 and the front surface of the protrusion part 61a in the charger body 61, and the fixing plate 62 is fixed to the protrusion part 61a by the bolts 63.

According to the above configuration, when the bolts 63 are loosened and the fixing plate 62 is removed from the protrusion part 61a in the charger body 61, the first charging terminal 3 is not constrained by the suspension member 4. It is therefore possible to freely move the first charging terminal 3 within the length of the wire 5 to connect the first charging terminal 3 to the charging terminal 64 of another device.

### <Seventh embodiment>

While electric power is charged in the moving body by electrically connecting the contact point of the first charging terminal and the contact point of the second charging terminal in the above first to sixth embodiments, electric power may be charged in the moving body in a noncontact charging method in the seventh embodiment. In the following description, elements of the seventh embodiment the same as those in the first embodiment are denoted by the same reference symbols as those in the first embodiment.

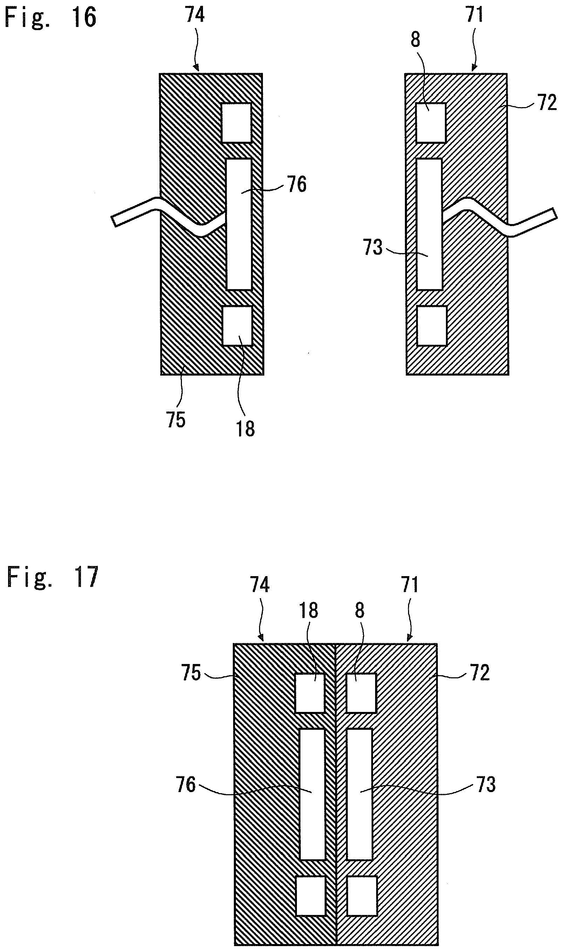

Fig. 16 is a horizontal part-sectional view schematically showing a state before the first charging terminal and the second charging terminal according to this embodiment are magnetically connected. Fig. 17 is a horizontal part-sectional view schematically showing a state after the first charging terminal and the second charging terminal according to this embodiment are magnetically connected.

A first charging terminal 71 according to this embodiment includes a power-feeding part 73 fixed to the inside of a case 72. Meanwhile, a second charging terminal 74 includes a power-receiving part 76 fixed to the inside of a case 75. According to the above configuration, when the first charging terminal 71 and the second charging terminal 74 are magnetically connected and the power-feeding part 73 of the first charging terminal 71 and the power-receiving part 76 of the second charging terminal 74 are magnetically coupled, electric power is supplied to the power-receiving part 76 of the second charging terminal 74 from the power-feeding part 73 of the first charging terminal 71.

A battery charger is provided which is capable of absorbing a position error of a moving body when the moving body is charged in a compact configuration. The battery charger according to one aspect of the present invention includes a second charging terminal magnetically connected to a first charging terminal of a moving body and supplies electric power from the second charging terminal to the first charging terminal, the battery charger including: a charger body; and a suspension member that suspends the second charging terminal from the charger body.

## Claims

1. A battery charger (1) comprising a first charging terminal (3) configured to be magnetically connected to a second charging terminal (7) of a moving body (6) and supply electric power from the first charging terminal (3) to the second charging terminal (7), the battery charger (1) comprising:
a charger body (2) configured to supply power to the first charging terminal (3) through a wire (5); and
a suspension member (4) that suspends the first charging terminal (3) from the charger body (2) and that is disposed substantially in the vertical direction of the battery charger (1),
**characterized by**
a turnover preventing member (9) that is fixed to the first charging terminal (3),
wherein the charger body (2), the suspension member (4), the first charging terminal (3) and the turnover preventing member (9) are arranged such that, when the turnover preventing member (9) and the first charging terminal (3) rotate about the axis extending substantially in the vertical direction of the battery charger (1), an end part of the turnover preventing member (9) longitudinally arranged in the horizontal direction contacts a front surface of the charger body (2), which inhibits the rotation of the first charging terminal (3).

2. The battery charger (1) according to Claim 1, wherein the turnover preventing member (9) is a plate-like member longitudinally arranged in the horizontal direction of the battery charger (1), and is fixed to the surface opposite to the surface of the first charging terminal (3) which is configured to be magnetically connected to the second charging terminal (7).

3. The battery charger (1) according to Claim 1, wherein the suspension member (4) comprises an elastic member.

4. The battery charger (1) according to any one of Claims 1 to 3, wherein the first charging terminal (3) comprises magnets (8) configured to be magnetically connected to magnets (16) of the second charging terminal (7) that are arranged in a substantially rhombic shape, wherein the magnets (8) of the first charging terminal are arranged in such a substantially rhombic shape as to prevent the first charging terminal (3) and the second charging terminal (7) from being magnetically connected upside down or inside out when the first charging terminal (3) and the second charging terminal (7) are magnetically connected in a state in which a surface (10a) of the first charging terminal (3) and a surface (14b) of the second charging terminal (7) are opposed to each other.

5. The battery charger (1) according to any one of Claims 1 to 4, wherein the first charging terminal (3) comprises a power-feeding part having a surface configured to be connected to a surface of a power-receiving part of the second charging terminal and configured to, when the first charging terminal (3) and the second charging terminal (7) are magnetically connected and one of the surface in the power-feeding part included in the first charging terminal (3) opposed to the second charging terminal (7) and the surface in the power-receiving part included in the second charging terminal (7) opposed to the first charging terminal (3) is wider than the other one, absorb positional deviation between the first charging terminal (3) and the second charging terminal (7).

6. The battery charger (1) according to any one of Claims 1 to 5, comprising a guide member corresponding to a peripheral edge part of the moving body (6), the guide member including a concave part (52b) to guide the moving body (6) to a charging position that is set.

7. The battery charger (1) according to any one of Claims 1 to 6, comprising a fixing member (2a) for fixing an upper end part of the suspension member (4) to the charger body (2), wherein the fixing member (2a) can be attached to or detached from the charger body (2).

8. The battery charger (1) according to any one of Claims 1 to 7, wherein the suspension member (4) is provided separately from the wire (5).

## Patentansprüche

1. Batterieladegerät (1) mit einem ersten Ladeterminal (3), der konfiguriert ist, um magnetisch mit einem zweiten Ladeterminal (7) eines beweglichen Körpers (6) verbunden zu werden und elektrische Energie von dem ersten Ladeterminal (3) zu dem zweiten Ladeterminal (7) zu liefern, wobei das Batterieladegerät (1) umfasst:
einen Ladekörper (2), der konfiguriert ist, um den ersten Ladekontakt (3) über einen Draht (5) mit Energie zu versorgen; und
ein Aufhängeelement (4), das den ersten Ladeterminal (3) an dem Ladekörper (2) aufhängt und das im Wesentlichen in vertikaler Richtung des Batterieladegeräts (1) angeordnet ist,
**gekennzeichnet durch**
ein Drehverhinderungselement (9), das an dem ersten Ladeterminal (3) befestigt ist,
wobei der Ladekörper (2), das Aufhängeelement (4), das erste Ladeterminal (3) und das Drehverhinderungselement (9) so angeordnet sind, dass dann, wenn sich das Drehverhinderungselement (9) und das erste Ladeterminal (3) um die Achse drehen, die sich im Wesentlichen in der vertikalen Richtung des Ladegeräts (1) erstreckt, ein Endteil des Drehverhinderungselements (9), der in horizontaler Richtung längs angeordnet ist, eine Vorderfläche des Ladekörpers (2) berührt, die die Drehung des ersten Ladeterminal (3) verhindert.

2. Das Batterieladegerät (1) nach Anspruch 1, wobei das Drehverhinderungselement (9) ein plattenförmiges Element ist, das in Längsrichtung in horizontaler Richtung des Batterieladegeräts (1) angeordnet und an der Fläche befestigt ist, die der Fläche des ersten Ladeterminals (3) gegenüberliegt, die konfiguriert ist, um magnetisch mit dem zweiten Ladeterminal (7) verbunden zu werden.

3. Batterieladegerät (1) nach Anspruch 1, wobei das Aufhängeelement (4) ein elastisches Element umfasst.

4. Batterieladegerät (1) nach einem der Ansprüche 1 bis 3, wobei das erste Ladeterminal (3) Magnete (8) umfasst, die konfiguriert sind, um magnetisch mit Magneten (16) des zweiten Ladeterminals (7) verbunden zu werden, die in einer im Wesentlichen rhombischen Form angeordnet sind, wobei die Magnete (8) des ersten Ladeterminals in einer im Wesentlichen rhombischen Form angeordnet sind, um zu verhindern, dass das erste Ladeterminal (3) und das zweite Ladeterminal (7) auf dem Kopf oder von innen nach außen magnetisch verbunden werden, wenn das erste Ladeterminal (3) und das zweite Ladeterminal (7) in einem Zustand magnetisch verbunden sind, in dem eine Fläche (10a) des ersten Ladetermins (3) und eine Fläche (14b) des zweiten Ladetermins (7) einander gegenüberliegen.

5. Batterieladegerät (1) nach einem der Ansprüche 1 bis 4, wobei das erste Ladeterminal (3) einen stromzuführenden Teil mit einer Fläche aufweist, die konfiguriert ist, um mit einer Fläche eines Strom aufnehmenden Teils des zweiten Ladeterminals verbunden zu sein und um konfiguriert zu sein, um dann, wenn das erste Ladeterminal (3) und das zweite Ladeterminal (7) magnetisch verbunden sind und eine der Flächen im stromeinspeisenden Teil, die in dem ersten Ladeterminal (3) gegenüber dem zweiten Ladeterminal (7) enthalten sind, und die Fläche im stromaufnehmenden Teil, die in dem zweiten Ladeterminal (7) gegenüber dem ersten Ladeterminal (3) enthalten ist, breiter ist als die andere, eine Positionsabweichung zwischen dem ersten Ladeterminal (3) und dem zweiten Ladeterminal (7) zu absorbieren.

6. Batterieladegerät (1) nach einem der Ansprüche 1 bis 5, umfassend ein Führungselement, das einem Umfangsrandteil des beweglichen Körpers (6) entspricht, wobei das Führungselement einen konkaven Teil (52b) zum Führen des beweglichen Körpers (6) in eine eingestellte Ladeposition beinhaltet.

7. Batterieladegerät (1) nach einem der Ansprüche 1 bis 6, umfassend ein Befestigungselement (2a) zum Befestigen eines oberen Endteils des Aufhängeelements (4) an dem Ladekörper (2), wobei das Befestigungselement (2a) an dem Ladekörper (2) befestigt oder von diesem gelöst werden kann.

8. Batterieladegerät (1) nach einem der Ansprüche 1 bis 7, wobei das Aufhängeelement (4) getrennt von dem Kabel (5) vorgesehen ist.

## Revendications

1. Chargeur de batterie (1) qui comprend une première borne de charge (3) configurée pour être connectée magnétiquement à une deuxième borne de charge (7) d'un corps mobile (6) et pour fournir la puissance électrique de la première borne de charge (3) à la deuxième borne de charge (7), dans lequel le chargeur de batterie (1) comprend :
un corps de chargeur (2) configuré pour fournir la puissance à la première borne de charge (3) par l'intermédiaire d'un fil (5) ; et
un élément de suspension (4) qui suspend la première borne de charge (3) au corps de chargeur (2) et qui est disposé sensiblement dans la direction verticale du chargeur de batterie (1),
**caractérisé par**
un élément anti-rotation (9) qui est fixé à la première borne de charge (3),
dans lequel le corps de chargeur (2), l'élément de suspension (4), la première borne de charge (3) et l'élément anti-rotation (9) sont agencés de sorte que, lorsque l'élément anti-rotation (9) et la première borne de charge (3) tournent autour de l'axe qui s'étend sensiblement dans la direction verticale du chargeur de batterie (1), une partie d'extrémité de l'élément anti-rotation (9) agencée longitudinalement dans la direction horizontale soit en contact avec une surface avant du corps de chargeur (2), ce qui empêche la rotation de la première borne de charge (3).

2. Chargeur de batterie (1) selon la revendication 1, dans lequel
l'élément anti-rotation (9) est un élément semblable à une plaque agencé longitudinalement dans la direction horizontale du chargeur de batterie (1), et est fixé à la surface opposée à la surface de la première borne de charge (3) qui est configurée pour être connectée magnétiquement à la deuxième borne de charge (7).

3. Chargeur de batterie (1) selon la revendication 1, dans lequel l'élément de suspension (4) comprend un élément élastique.

4. Chargeur de batterie (1) selon l'une quelconque des revendications 1 à 3, dans lequel la première borne de charge (3) comprend des aimants (8) configurés pour être connectés magnétiquement aux aimants (16) de la deuxième borne de charge (7) qui sont agencés en une forme sensiblement rhombique, dans lequel les aimants (8) de la première borne de charge sont agencés en une forme sensiblement rhombique telle qu'elle empêche la connexion magnétiquement de la première borne de charge (3) et de la deuxième borne de charge (7) sens dessus dessous lorsque la première borne de charge (3) et la deuxième borne de charge (7) sont connectées magnétiquement dans un état dans lequel une surface (10a) de la première borne de charge (3) et une surface (14b) de la deuxième borne de charge (7) se font mutuellement face.

5. Chargeur de batterie (1) selon l'une quelconque des revendications 1 à 4, dans lequel la première borne de charge (3) comprend une partie de fourniture de puissance qui comporte une surface configurée pour être reliée à une surface d'une partie de réception de puissance de la deuxième borne de charge et configurée pour, lorsque la première borne de charge (3) et la deuxième borne de charge (7) sont connectées magnétiquement et l'une de la surface dans la partie de fourniture de puissance incluse dans la première borne de charge (3) opposée à la deuxième borne de charge (7) et de la surface dans la partie de réception de puissance incluse dans la deuxième borne de charge (7) opposée à la première borne de charge (3) est plus large que l'autre, absorber un écart de position entre la première borne de charge (3) et la deuxième borne de charge (7).

6. Chargeur de batterie (1) selon l'une quelconque des revendications 1 à 5, qui comprend un élément de guidage qui correspond à une partie de bord périphérique du corps mobile (6), dans lequel l'élément de guidage comprend une partie concave (52b) pour guider le corps mobile (6) vers une position de charge qui est établie.

7. Chargeur de batterie (1) selon l'une quelconque des revendications 1 à 6, qui comprend un élément de fixation (2a) pour fixer une partie d'extrémité supérieure de l'élément de suspension (4) au corps de chargeur (2), dans lequel l'élément de fixation (2a) peut être attaché au corps de chargeur (2) ou détaché de celui-ci.

8. Chargeur de batterie (1) selon l'une quelconque des revendications 1 à 7, dans lequel l'élément de suspension (4) est prévu séparément du fil (5).
